# EUROPEAN PATENT SPECIFICATION

(11) **EP 2 645 204 B1**
(45) Date of publication and mention of the grant of the patent: **19.12.2018**
(21) Application number: 12161941.5
(22) Date of filing: 29.03.2012
(51) Int. Cl.: G06F 3/046, H04B 1/3888, H04M 1/02, H04M 1/725

(54) **Accessory cover for an electronic device and system**
Zubehörabdeckung für eine elektronische Vorrichtung und System
Couvercle d'accessoire pour dispositif électronique et système

(43) Date of publication of application: 02.10.2013
(73) Proprietor: Deutsche Telekom AG, 53113 Bonn (DE)
(72) Inventor: Roshandel, Mehran, 13591 Berlin (DE); Ketabdar, Hamed, 10119 Berlin (DE)
(74) Representative: Vossius & Partner Patentanwälte Rechtsanwälte mbB

(56) References cited:
- US-A1- 2008 136 775
- US-A1- 2011 190 060
- HARRISON C ET AL: "Abracadabra: Wireless, High-Precision, and Unpowered Finger Input for Very Small Mobile Devices", PROCEEDINGS OF THE 22ND ANNUAL ACM SYMPOSIUM ON USER INTERFACE SOFTWARE AND TECHNOLOGY: VICTORIA, BRITISH COLUMBIA, OCTOBER 4 - 7, 2009, ACM, NEW YORK, NY, 4 October 2009 (2009-10-04), page 4pp, XP007913390, ISBN: 978-1-60558-745-5

## Description

### Technical Field

The present invention relates to an accessory cover for an electronic device, and more particularly to an interaction accessory cover having magnetic sensors to be used in interactive controlling of an electronic device. Moreover, the invention relates to a system including such an accessory cover and an electronic device.

### Background Art

Around device interaction (ADI) is being increasingly investigated as an efficient interaction technique for mobile and/or tangible electronic devices. In this context, ADI relates to human-computer-interaction between a user and an electronic device based on the recognition of gestures of the user in the proximity of the electronic device. Such ADI can provide possibility of extending interaction space of small mobile devices beyond their physical boundary allowing effective use of the three dimensional (3D) space around the device for interaction between a user and the device. This can be especially useful for small tangible/wearable mobile or controller devices such as cell phones, wrist watches, headsets, personal digital assistants (PDA), media players etc. In these devices, it is usually comparably difficult to operate small buttons and touch screens particularly since parts of the touch screen are usually covered by the hand of the user during interaction.

For preventing these drawbacks and in particular for using the space beyond a device which can be easily used no matter how small the device is, a plurality of ADI concepts have been developed which are based on the use of different sensory inputs such as camera, infrared distance sensors, touch sensor at the back of device, etc.. These concepts can allow coarse movement-based gestures made in the 3D space around the device to be used for sending different interaction commands such as turning pages (in an e-book or calendar), changing sound volume, zooming, rotation, etc.. For example, the publication "HoverFlow: expanding the design space of around-device interaction" of Kratz, S. and Rohs, M., published by proceedings of the 11th International Conference on Human-Computer Interaction with Mobile Devices and Services, Bonn, Germany, Sep. 2009, describes an ADI interface that allows mobile devices to track coarse hand gestures performed above the device's screen. Thereby, infrared proximity sensors are used to track hand and finger positions in the device's proximity. The hand or finger gestures are detected using a specific algorithm and a rough overview of the design space of according ADI-based interfaces is provided. However, the ADI concepts of the prior art all rely on specific physical arrangements which are not standard in electronic devices today. Consequently, the implementation of these ADI concepts is rather complex and expensive. Further, most of these ADI concepts, in particular the ADI concepts allowing for a contactless interaction between the user and the device, require visual contact between the hand/finger of the user and the device. This can constrict the application of the ADI concepts.

In the meantime, EP 2 354 897 A1 discloses an ADI technology for controlling an electronic device by using a magnetic sensor which is integrated in many standard electronic devices and a comtrolling means for controlling the electronic device based on the movement of a manetic element detected by the magnetic sensor. According to the technology, the magnetic sensor measures magnetic field strength of the magnetic element and the controlling means controls the electronic device by evaluting change of the measured magnetic field strength of the magnetic element.

Although the above prior art provides an around device interaction technology which is rather simple to implement on standard electronic devices, the following drawbacks have been recognized. First, it is impossible to determine the exact location of the magnetic element based on the measurements of a single built-in magnetic sensor. This consequently renders it difficult to achieve a more sophisticated degree of interactive control of the device. Second, implementation of the technology is limited to a specific type of electronic device. In other words, the technology is only applicable to an electronic device which has a built-in magnetic sensor.

### Summary of the Invention

In view of the foregoing, it is an object of the present invention to overcome deficiencies of the prior art, and provide around device interaction which allows a more sophisticated degree of interactive control of an electronic device and which can be implemented to a type of electronic device without a built-in magnetic sensor.

The above objects of the present invention are achieved by the inventions defined in the claims.

The present invention provides an accessory cover for an electronic device, comprising at least one sensor for measuring magnetic field strength and/or direction.

Preferably, the accessory cover includes two sensors which are preferably arranged to be at opposite sides of the electronic device when the accessory cover is combined with the electronic device.

Further, the accessory cover is configured to transmit measurement signals obtained by the sensor(s) to a data interpreter which is configured to, based on the transmitted data, locate the position of a magnetic element in space by three dimensional coordinates and angular position thereof, said magnetic element causing said measurement signals to be generated.

The accessory cover may further comprise a wireless data communication module configured for data transmission between the sensor and the data interpreter.

Preferably, the accessory cover further comprises a data communication terminal connectable with a mating terminal of the electronic device.

Furthermore, the present invention provides a system including an electronic device and the aforementioned cover combinable or connectable with the electronic device, the electronic device having an around device interaction means for interacting with a user of the electronic device, wherein the around device interaction means is configured to control the electronic device according to movement of a magnetic element by the user.

Preferably, the around device interaction means is configured to control the electronic device based on the measurement signal of magnetic field strength and/or direction of the magnetic element by the sensor of the accessory cover.

Further, it is preferred that the accessory cover includes plural sensors for measuring magnetic field strength and/or direction, and the around device interaction means is configured to control the electronic device using information on location of the magnetic element obtained from measurement signals of the plural sensors.

The electronic device further includes a sensor for measuring magnetic field strength and/or direction, and the around device interaction means is configured to control the electronic device using information on location of the magnetic element, including information obtained based on measurement signals of the sensor in the electronic device.

The system may further include a data interpreter configured to determine, based on the measurement signals of the sensors, a position of the magnetic element in space by three dimensional coordinates and angular position thereof, and provide the location information to the around device interaction means. Herein, the measurement signals of the sensors may be measurement signals of (i) one or more sensors of the accessory cover or of (ii) the one or more sensors of the accessory cover and the sensor of the electronic device.

The data interpreter can be a part of the electronic device.

Alternatively, the data interpreter can be independent from the electronic device.

Preferably, the system is configured to perform data transmission between the data interpreter and other member via wireless data communication, said other member being at least one of the sensors of the accessory cover, one of the sensors of the electronic device and/or the around device interaction means.

An electronic device is therefore capable of being controlled by around device interaction with a sophisticated degree of interaction between a user and an electronic device. Further, around device interaction can be easily implemented to a type of electronic device which does not have a built-in magnetic sensor.

In more specific, the accessory cover according to the present invention comprises a back cover section and a side wall section connected to one major surface of the back cover section. The side wall section may run along the periphery of the back cover section forming a surrounding outer wall. The space surrounded by the back cover section and the side wall section fits the outline of the electronic device so as to accommodate the electronic device therein.

The accessory cover according to the present invention comprises at least one magnetic sensor. Preferably, only two, or two or more magnetic sensors are arranged in the accessory cover to measure magnetic field strengths and/or directions. For example, the side wall section has four corners, at each of which a magnetic sensor can be incorporated. Thereby, the magnetic strengths can particularly be measured in x-direction, in y-direction and in z-direction at plural positions around the electronic device, based on which exact location of a magnetic element in space can be calculated. Accordingly, three dimensional (3D) gestures can be used for controlling the electronic device, allowing a sophisticated 3D user interaction.

Further, the electronic device has an around device interaction means for interacting with a user of the electronic device. The electronic device is controlled by the around device interaction means according to a movement of a magnetic element while the magnetic field strength and/or direction of the magnetic element are measured by the magnetic sensor. The electronic device can preferably be a portable or mobile device such as a laptop computer, a tablet computer or the like and in particular a comparably small mobile device such as a mobile phone, a personal digital assistant (PDA), a media player, e.g. a sound and/or video player, a watch, e.g. a wrist watch, a headset, a portable navigation system, or the like. The ADI according to the invention can particularly be used for the interaction between a user and a computer application being stored on and executed by the electronic device, such as a computer game.

According to the invention, the human-computer-interaction is based on deforming of the magnetic field around the electronic device and detecting the temporal patterns generated via coarse gestures performed by the user. Specifically, in order to interact with the electronic device, the user holds a properly shaped magnetic element, which can be, e.g., in shape of a rod, a pen, a stick or a ring, and affects the magnetic field around the device, in hand and draws coarse gestures in the 3D space around the electronic device. For example, such gestures can be movements of the magnetic element in front or at the back of the electronic device wherein gestures at the back of the electronic device allow a user interaction without covering the screen with the hand of the user. The gestures can be interpreted as different interaction commands by the around device interaction means of the electronic device. A more complex set of features/actions can be built using data obtained by multiple sensors.

According to the invention, the accessory cover preferably includes plural sensors. In this case, the magnetic element's location can be obtained from measurements of the plural sensors, thereby providing the around device interaction means with necessary information to control the electronic device. Alternatively, when the target device is a standard mobile device having a built-in magnetic sensor, it is also possible for the accessory cover to include only one magnetic sensor. In this case, the magnetic element's location can be obtained based on measurements of both sensors in the accessory cover as well as in the electronic device. The information on the magnetic element's location so obtained can be provided to the around device interaction means to control the electronic device. Therefore, the electronic device of the present invention can be one with or without a built-in magnetic sensor. According to a preferred embodiment, the accessory cover includes only two sensors, irrespective of the target device having its own built-in magnetic sensor.

The system further includes a data interpreter which is configured to, based on the measurements by the magnetic sensors, locate a position of a magnetic element in space by three dimensional coordinates and angular position thereof. When the data interpreter calculates the location of the magnetic element in space by three dimensional coordinates and angular position thereof, six unknown variables, including geometrical coordinates (x, y, z) as well as angular position of the magnetic element need to be calculated. Since each magnetic sensor can provide three readings of magnetic field at its own position, theoretically speaking, assuming that the shape of magnetic field distribution related to the magnetic element is already known, the above six unknown variables can be calculated using standard geometrical equations based on information provided from two magnetic sensors. In practice, however, having more sensors will provide with more precise calculation of the magnetic element's location because the sensitivity of magnetic sensors are limited to a certain range. Based on the calculation result of the data interpreter, an around device interaction means controls the electronic device. Consequently, a three dimensional (3D) gesture made by a user is interpreted based on exact location of the magnetic element, thereby allowing a sophisticated degree of interactive control of the electronic device.

In case the accessory cover has only one magnetic sensor, it is impossible to determine the location of the magnetic element based on the measurement of the single magnetic sensor of the accessory cover. According to the present invention, however, the data interpreter may obtain the location of the magnetic element in space based on the measurements provided from the magnetic sensor of the accessory cover as well as the built-in sensor of the electronic device. Each of the two magnetic sensors can provide three readings of magnetic field, which is enough for the data interpreter to calculate the exact location of the magnetic element. According to the system of the present invention, since the electronic device can be controlled based on the exact location of the magnetic element so obtained, a three dimensional (3D) gesture made by a user can be interpreted on a fine-grained level. Consequently, the system of the present invention allows a more sophisticated degree of interactive control of the electronic device.

The signal sensed by the magnetic sensors may be first transmitted to and stored in a data storage area of the electronic device. Then, the data interpreter may access and read the data stored in the data storage area. In this case, data transmission between the magnetic sensors of the accessory cover and the data interpreter of the electronic device may include data transmission between the magnetic sensors and the data storage area.

Depending on the type of the electronic device or specific circumstances under which the system is used, the data interpreter can be either a part of the electronic device or independent from it. For example, in case of a standard mobile device, the data interpreter can be easily incorporated therein in the form of a computer application being stored on and executed by the electronic device. However, in case the target device is not a standard mobile device, e.g., entertainment devices in car, the interpretation of data provided by sensors is done by an external hardware. In other words, the data interpreter can be an independent member from the electronic device. The result of interpretation is then sent back to the target device. For example, the data interpreter may be incorporated with an accessory cover.

The data transmission between the magnetic sensors of the accessory cover and the data interpreter, and/or between the data interpreter and the around device interaction means can be performed via standard wireless data communication technique, e.g., WLAN, Bluetooth or infrared, etc. Alternatively, the data transmission can be done via standard wired technique such as USB, Firewire, RS232, and so forth or using an interface terminal of the electronic device. It is needless to say, however, the data can be also transmitted using other technique which is not a standard protocol.

The accessory cover of the present invention can not only help extending the interaction space for a user from 2D screen-size to 3D space available around the device but also allow a more sophisticated degree of interactive control of the device using the exact location of the magnetic element. Furthermore, the accessory cover extends the range of application of an interactive control to even an electronic device without a built-in magnetic sensor.

These and other aspects of the invention will be apparent from and elucidated with reference to the embodiment(s) described hereinafter.

### Brief Description of the Drawings

The accessory cover for an electronic device and the system including the accessory cover according to the present invention are described in more detail hereinbelow by way of exemplary embodiments and with reference to the attached drawings, in which:
Fig. 1 shows a perspective view of a first embodiment of an accessory cover for an electronic device according to the invention;
Fig. 2 illustrates the accessory cover of the first embodiment in use by being combined with an electronic device;

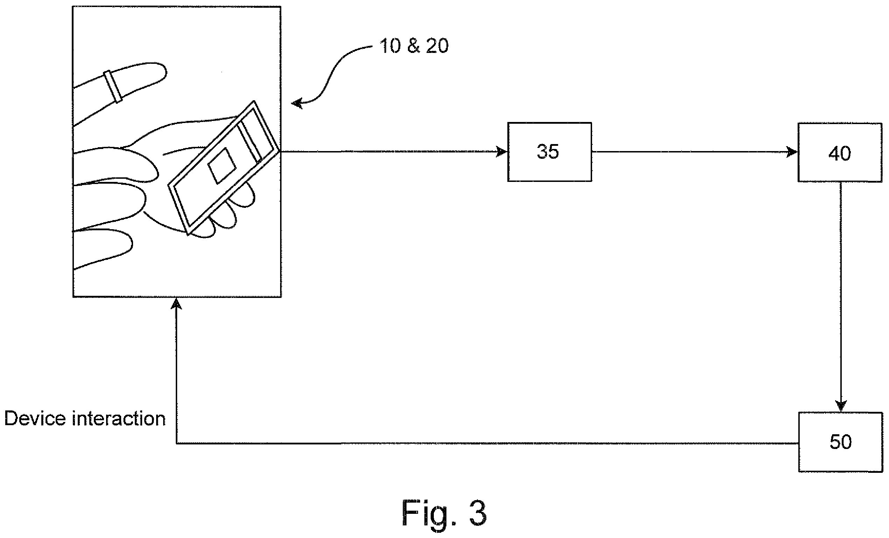

Fig. 3 depicts a flow scheme of an interactive control of the electronic device according to the first embodiment;
Fig. 4 shows a perspective view of a second embodiment of an accessory cover for an electronic device according to the invention; and
Fig. 5 illustrates the accessory cover of the second embodiment in use by being combined with an electronic device, including a partially exploded view.

### Detailed Description of the Invention

In the following description certain terms are used for reasons of convenience and are not to be interpreted as limiting. The terminology comprises the explicitly mentioned terms as well as their derivations and terms with a similar meaning.

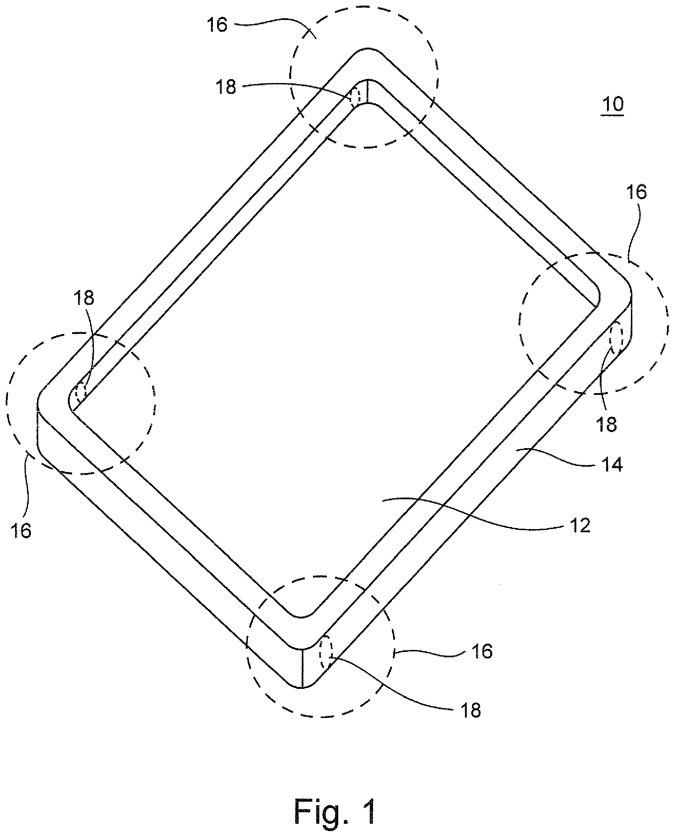

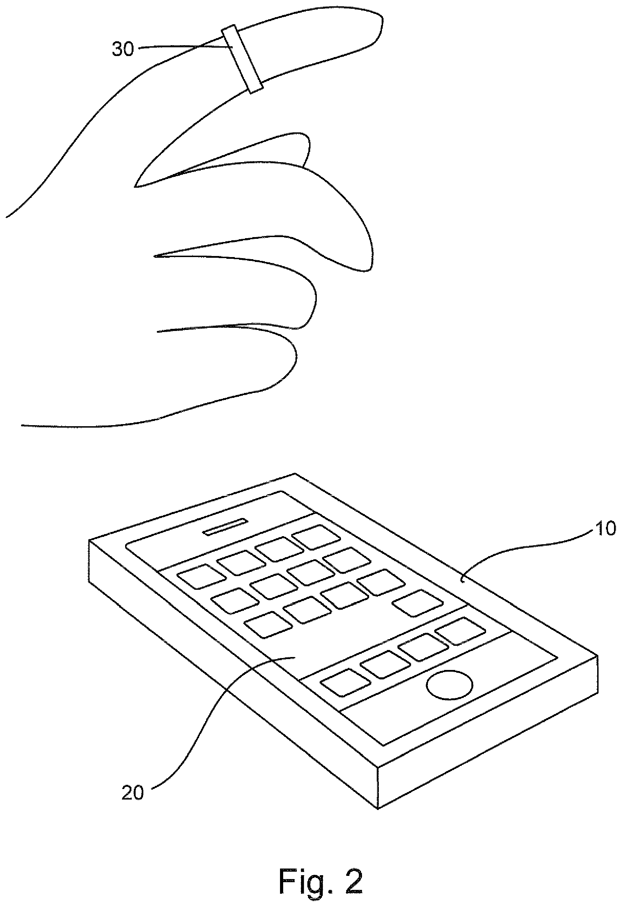

In accordance with a first embodiment of the present invention, Fig. 1 shows a perspective view of an accessory cover 10, e.g., a protective cover, suitable for holding an electronic device 20. Fig. 2 shows the accessory cover 10 in use by being combined with an electronic device 20 such as a mobile communication device.

The accessory cover 10 comprises a back cover section 12 and a side wall section 14 connected to one major surface of the back cover section 12. The side wall section 14 runs along the periphery of the back cover section 12 forming a surrounding outer wall. The space surrounded by the back cover section 12 and the side wall section 14 fits the outline of the electronic device 20 so as to accommodate the electronic device 20 therein. In the illustrated embodiment, the side wall section 14 has four corners 16, at each of which a magnetic sensor 18 (shown in dotted line) is incorporated. In the fist embodiment, the electronic device 20 can be one with or without a built-in magnetic sensor.

A magnetic element 30 in Fig. 2 is in the shape of ring. The magnetic sensors 18 of the accessory cover 10 magnetically sense movement of the magnetic element 30 in the neighbourhood of the electronic device 20. The sensed signal is then transmitted to a data interpreter 40, which is a computer application being stored on and executed by the electronic device 20. In more detail, the signal sensed by the magnetic sensors 18 is first transmitted to and stored in a data storage area 35 of the electronic device 20. Then, the data interpreter 40 accesses and reads the data stored in the data storage area 35. Herein, the data transmission between the magnetic sensors 18 of the accessory cover 10 and the data interpreter 40 of the electronic device 20 (to be exact, between the magnetic sensors 18 and the data storage area 35) is performed via standard wireless data communication technique, e.g., WLAN, Bluetooth or infrared, etc.

The data interpreter 40 then calculates the location of the magnetic element 30 in space by three dimensional coordinates and angular position thereof based on the information provided from the four magnetic sensors 18. In order to obtain the exact location of the magnetic element 30, six unknown variables need to be calculated, including geometrical coordinates (x, y, z) as well as angular position of the magnetic element 30. Herein, each magnetic sensor 18 being able to provide three readings of magnetic field, and assuming that the magnetic field distribution of the magnetic element 30 is given, the above six unknown variables can be calculated based on information from only two magnetic sensors 18 using standard geometrical equations. Since the accessory cover 10 according to the first embodiment of the present invention has four magnetic sensors 18 incorporated therein, it can provide with additional measurements of the magnetic field from different positions around the electronic device 20. This will guarantee more precise calculation of the magnetic element's location by the data interpreter 40. In other words, a three dimensional (3D) gesture made by a user can be interpreted based on exact location of the magnetic element 30. After all, because an around device interaction means 50 controls the electronic device 20 based on the calculation result of the data interpreter 40, the system of the instant embodiment allows a more sophisticated degree of interactive control of the electronic device 20.

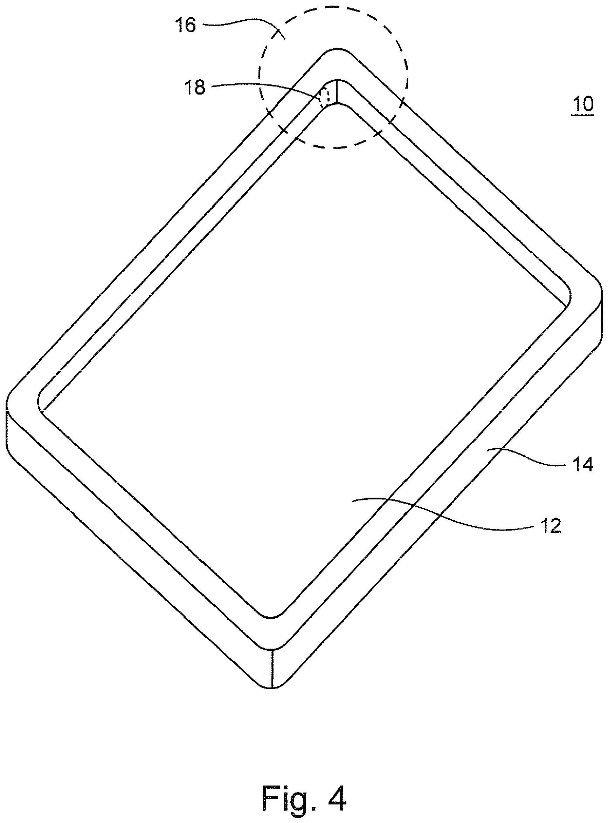

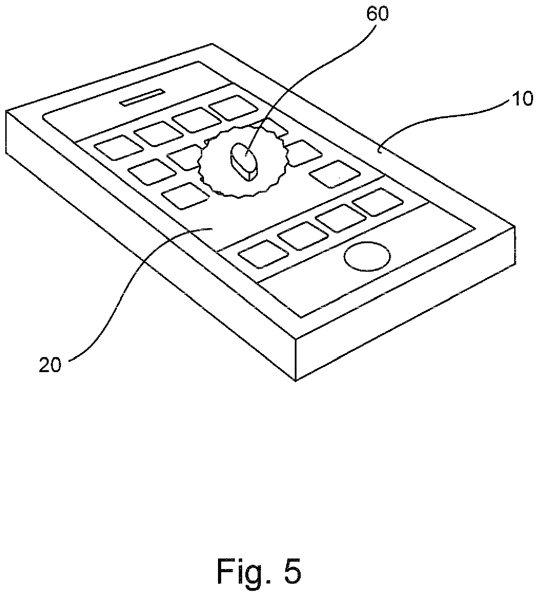

Next, a second embodiment of the present invention is described with reference to Figs. 4 and 5. Mainly described are the differences between the first and second embodiments; and common features are given the same reference signs and excluded from explanation. Accordingly, when appropriate, the explanation given in the first embodiment applies to features not particularly explained below.

In accordance with the second embodiment of the present invention, Fig. 4 shows a perspective view of an accessory cover 10, e.g., a protective cover, suitable for holding an electronic device 20. Fig. 5 shows the accessory cover 10 in use being combined with an electronic device 20, including a partially exploded view. The main differences of the system according to the second embodiment from that of the first embodiment is that: the accessory cover 10 has only one magnetic sensor 18 incorporated in one of the corners 16 of the side wall section 14; and the electronic device 20 is limited to a type of device which has a built-in magnetic sensor 60.

In the illustrated embodiment, it is impossible to determine the location of the magnetic element 30 based on the measurement of the single magnetic sensor 18 of the accessory cover 10. Therefore, the data interpreter 40 obtains the location of the magnetic element 30 in space based on the measurements provided from the magnetic sensor 18 of the accessory cover 10 as well as the built-in sensor 60 of the electronic device 20. Each of the two magnetic sensors 18 and 60 can provide three readings of magnetic field, which is enough for the data interpreter 40 to calculate the exact location of the magnetic element 30. According to the system of the second embodiment of the present invention, since the electronic device 20 can be controlled based on the exact location of the magnetic element 30 so obtained, a three dimensional (3D) gesture made by a user can be interpreted on a fine-grained level. Consequently, the system of the instant embodiment allows a more sophisticated degree of interactive control of the electronic device 20.

Other aspects, features, and advantages will be apparent from the summary above, as well as from the description that follows, including the figures and the claims.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. An accessory cover (10) for an electronic device (20) comprising a back cover section (12) and a side wall section (14) connected to one major surface of the back cover section (12), wherein the the side wall section (14) runs along the periphery of the back cover section (12) forming a surrounding outer wall and the space surrounded by the back cover section (12) and the side wall section (14) fits the outline of the electronic device (20) so as to accommodate the electronic device (20) therein, **characterized by** comprising at least two sensors (18) for measuring magnetic field strength and/or direction and means for transmitting measurement signals obtained by the sensor to a data interpreter on the electronic device (20).

2. The accessory cover (10) according to claim 1, including two sensors which are arranged to be at opposite sides of the electronic device (20) when the accessory cover (10) is combined with the electronic device (20).

3. The accessory cover (10) according to claim 1 or 2 wherein the data interpreter (40) is configured to, based on the transmitted data, locate the position of a magnetic element (30) in space by three dimensional coordinates and angular position thereof, said magnetic element (30) causing said measurement signals to be generated.

4. The accessory cover (10) according to claim 3, further comprising a wireless data communication module configured for data transmission between the sensor (18) and the data interpreter (40).

5. The accessory cover (10) according to any one of the preceding claims, further comprising a data communication terminal connectable with a mating terminal of the electronic device (20).

6. A system including an electronic device (20) and the accessory cover (10) according to any one of claims 1 and 3 to 5, insofar as dependent upon claim 1, combinable or connectable with the electronic device (20), the electronic device (20) having an around device interaction means (50) for interacting with a user of the electronic device (20), wherein the around device interaction means (50) is configured to control the electronic device (20) according to movement of a magnetic element (30) by the user.

7. The system according to claim 6, wherein the around device interaction means (50) is configured to control the electronic device (20) based on the measurement signal of magnetic field strength and/or direction of the magnetic element (30) by the sensor (18) of the accessory cover (10).

8. The system according to claim 6 or 7, wherein the accessory cover (10) includes plural sensors (18) for measuring magnetic field strength and/or direction, and the around device interaction means (50) is configured to control the electronic device (20) using information on location of the magnetic element obtained from measurement signals of the plural sensors (18).

9. The system according to claim 6 or 7, wherein the electronic device (20) further includes a sensor (60) for measuring magnetic field strength and/or direction, and the around device interaction means (50) is configured to control the electronic device (20) using information on location of the magnetic element, including information obtained based on measurement signal of the sensor (60) in the electronic device (20).

10. The system according to claim 8 or 9, further including a data interpreter (40) configured to determine, based on the measurement signals of the sensors (18, 60), a position of the magnetic element (30) in space by three dimensional coordinates and angular position thereof, and provide the location information to the around device interaction means (50).

11. The system according to claim 10 wherein the data interpreter (40) is a part of the electronic device (20).

12. The system according to claim 10, wherein the data interpreter (40) is independent from the electronic device (20).

13. The system according to claim 10, 11 or 12, wherein the system is configured to perform data transmission between the data interpreter (40) and other member via wireless data communication, said other member being at least one of the sensors (18) of the accessory cover (10), one of the sensors (60) of the electronic device (20) and/or the around device interaction means (50).

## Patentansprüche

1. Zubehörabdeckung (10) für eine elektronische Vorrichtung (20), die einen Rückabdeckungsabschnitt (12) und einen Seitenwandabschnitt (14) aufweist, der mit einer Hauptfläche des Rückabdeckungsabschnitts (12) verbunden ist, wobei der Seitenwandabschnitt (14) längs des Umfangs der Rückabdeckungsabschnitt (12) verläuft, wobei er eine umgebende Außenwand bildet und der Raum, der durch den Rückabdeckungsabschnitt (12) und den Seitenwandabschnitt (14) umgeben ist, zum Umriss der elektronischen Vorrichtung (20) passt, um die elektronische Vorrichtung (20) darin unterzubringen, **dadurch gekennzeichnet, dass**
sie mindestens zwei Sensoren (18) zum Messen der Magnetfeldstärke und/oder -richtung und Mittel zum Übertragen von durch den Sensor erhaltenen Messsignalen zu einem Dateninterpreter an der elektronischen Vorrichtung (20) aufweist.

2. Zubehörabdeckung (10) nach Anspruch 1, die zwei Sensoren aufweist, die auf gegenüberliegenden Seiten der elektronischen Vorrichtung (20) angeordnet sind, wenn die Zubehörabdeckung (10) mit der elektronischen Vorrichtung (20) kombiniert ist.

3. Zubehörabdeckung (10) nach Anspruch 1 oder 2, wobei der Dateninterpreter (40) konfiguriert ist, beruhend auf den übertragenen Daten die Position eines magnetischen Elements (30) im Raum durch dessen dreidimensionale Koordinaten und Winkelposition zu lokalisieren, wobei das magnetische Element (30) bewirkt, dass die Messsignale erzeugt werden.

4. Zubehörabdeckung (10) nach Anspruch 3, die ferner ein drahtloses Datenkommunikationsmodul aufweist, das zur Datenübertragung zwischen dem Sensor (18) und dem Dateninterpreter (40) konfiguriert ist.

5. Zubehörabdeckung (10) nach einem der vorhergehenden Ansprüche, die ferner ein Datenkommunikationsendgerät aufweist, das mit einem passenden Endgerät der elektronischen Vorrichtung (20) verbindbar ist.

6. System, das eine elektronische Vorrichtung (20) und die Zubehörabdeckung (10) nach einem der Ansprüche 1 und 3 bis 5 aufweist, insoweit von Anspruch 1 abhängig, die mit der elektronischen Vorrichtung (20) kombinierbar oder verbindbar ist, wobei die elektronische Vorrichtung (20) ein Mittel (50) zur Interaktion mit der Umgebung der Vorrichtung zur Interaktion mit einem Benutzer der elektronischen Vorrichtung (20) aufweist, wobei das Mittel (50) zur Interaktion mit der Umgebung der Vorrichtung konfiguriert ist, die elektronische Vorrichtung (20) entsprechend einer Bewegung eines magnetischen Elements (30) durch den Benutzer zu steuern.

7. System nach Anspruch 6, wobei das Mittel (50) zur Interaktion mit der Umgebung der Vorrichtung konfiguriert ist, die elektronische Vorrichtung (20) beruhend auf dem Messsignal der Magnetfeldstärke und/oder der Richtung des magnetischen Elements (30) durch den Sensor (18) der Zubehörabdeckung (10) zu steuern.

8. System nach Anspruch 6 oder 7, wobei die Zubehörabdeckung (10) mehrere Sensoren (18) zum Messen der Magnetfeldstärke und/oder der Richtung aufweist, und das Mittel (50) zur Interaktion mit der Umgebung der Vorrichtung konfiguriert ist, die elektronische Vorrichtung (20) mittels Informationen über den Ort des magnetischen Elements zu steuern, die aus Messsignalen der mehreren Sensoren (18) erhalten werden.

9. System nach Anspruch 6 oder 7, wobei die elektronische Vorrichtung (20) ferner einen Sensor (60) zum Messen der Magnetfeldstärke und/oder Richtung aufweist, und das Mittel (50) zur Interaktion mit der Umgebung der Vorrichtung konfiguriert ist, die elektronische Vorrichtung (20) mittels Informationen über den Ort des magnetischen Elements zu steuern, die Informationen einschließen, die beruhend auf dem Messsignal der Sensors (60) in der elektronischen Vorrichtung (20) erhalten werden.

10. System nach Anspruch 8 oder 9, die ferner einen Dateninterpreter (40) aufweist, der konfiguriert ist, beruhend auf den Messsignalen der Sensoren (18, 60) eine Position des magnetischen Elements (30) im Raum durch dessen dreidimensionale Koordinaten und Winkelposition zu bestimmen und die Ortsinformationen an das Mittel (50) zur Interaktion mit der Umgebung der Vorrichtung zu liefern.

11. System nach Anspruch 10, wobei der Dateninterpreter (40) ein Teil der elektronischen Vorrichtung (20) ist.

12. System nach Anspruch 10, wobei der Dateninterpreter (40) unabhängig von der elektronischen Vorrichtung (20) ist.

13. System nach Anspruch 10, 11 oder 12, wobei das System konfiguriert ist, eine Datenübertragung zwischen dem Dateninterpreter (40) und einem anderen Element über eine drahtlose Datenkommunikation durchzuführen, wobei das andere Element mindestens einer der Sensoren (18) der Zubehörabdeckung (10), einer der Sensoren (60) der elektronischen Vorrichtung (20) und/oder das Mittel (50) zur Interaktion mit der Umgebung der Vorrichtung ist.

## Revendications

1. Couvercle accessoire (10) pour un dispositif électronique (20) comprenant une section de couvercle arrière (12) et une section de paroi latérale (14) raccordée à une surface principale de la section de couvercle arrière (12), la section de paroi latérale (14) s'étendant le long de la périphérie de la section de couvercle arrière (12) en formant une paroi extérieure périphérique et l'espace entouré par la section de couvercle arrière (12) et la section de paroi latérale (14) étant ajusté au pourtour du dispositif électronique (20) de manière à contenir le dispositif électronique (20), **caractérisé en ce qu'**il comprend au moins deux capteurs (18) pour la mesure d'une intensité et/ou d'une direction de champ magnétique et un moyen de transmission de signaux de mesure obtenus par le capteur vers un interpréteur de données sur le dispositif électronique (20).

2. Couvercle accessoire (10) selon la revendication 1, comprenant deux capteurs agencés de manière à être présentés sur des côtés opposés du dispositif électronique (20) quand le couvercle accessoire (10) est associé au dispositif électronique (20).

3. Couvercle accessoire (10) selon la revendication 1 ou la revendication 2, où l'interpréteur de données (40) est prévu pour localiser sur la base des données transmises la position dans l'espace d'un élément magnétique (30) par trois coordonnées dimensionnelles et par la position angulaire de celui-ci, ledit élément magnétique (30) entraînant la génération des signaux de mesure.

4. Couvercle accessoire (10) selon la revendication 3, comprenant en outre un module de communication de données sans fil prévu pour une transmission de données entre le capteur (18) et l'interpréteur de données (40).

5. Couvercle accessoire (10) selon l'une des revendications précédentes, comprenant en outre un terminal de communication de données connectable avec une borne correspondante du dispositif électronique (20).

6. Système comprenant un dispositif électronique (20) et le couvercle accessoire (10) selon l'une des revendications 1 et 3 à 5, si celle-ci est dépendante de la revendication 1, combinable ou connectable avec le dispositif électronique (20), le dispositif électronique (20) comportant un moyen d'interaction de dispositif avec l'environnement (50) destiné à interagir avec un utilisateur du dispositif électronique (20), le moyen d'interaction de dispositif avec l'environnement (50) étant prévu pour commander le dispositif électronique (20) en fonction de déplacement d'un élément magnétique (30) par l'utilisateur.

7. Système selon la revendication 6, où le moyen d'interaction de dispositif avec l'environnement (50) est prévu pour commander le dispositif électronique (20) sur la base du signal de mesure d'intensité et/ou de direction de champ magnétique de l'élément magnétique (30) émis par le capteur (18) du couvercle accessoire (10).

8. Système selon la revendication 6 ou la revendication 7, où le couvercle accessoire (10) comprend plusieurs capteurs (18) pour la mesure d'intensité et/ou de direction de champ magnétique, et où le moyen d'interaction de dispositif avec l'environnement (50) est prévu pour commander le dispositif électronique (20) au moyen d'informations de localisation de l'élément magnétique obtenues des signaux de mesure de la pluralité de capteurs (18).

9. Système selon la revendication 6 ou la revendication 7, où le dispositif électronique (20) comprend en outre un capteur (60) pour la mesure d'intensité et/ou de direction de champ magnétique, et où le moyen d'interaction de dispositif avec l'environnement (50) est prévu pour commander le dispositif électronique (20) au moyen d'informations de localisation de l'élément magnétique, comprenant des information obtenues sur la base d'un signal de mesure du capteur (60) dans le dispositif électronique (20).

10. Système selon la revendication 8 ou la revendication 9, comprenant en outre un interpréteur de données (40) prévu pour déterminer, sur la base des signaux de mesure des capteurs (18, 60), une position dans l'espace de l'élément magnétique (30) par trois coordonnées dimensionnelles et par la position angulaire de celui-ci, et délivrer les informations de localisation au moyen d'interaction de dispositif avec l'environnement (50).

11. Système selon la revendication 10, où l'interpréteur de données (40) fait partie du dispositif électronique (20).

12. Système selon la revendication 10, où l'interpréteur de données (40) est indépendant du dispositif électronique (20).

13. Système selon la revendication 10, la revendication 11 ou la revendication 12, où ledit système est prévu pour effectuer une transmission de données entre l'interpréteur de données (40) et un autre élément par une communication de données sans fil, ledit autre élément étant au moins un des capteurs (18) du couvercle accessoire (10), un des capteurs (60) du dispositif électronique (20) et/ou le moyen d'interaction de dispositif avec l'environnement (50).
